# EUROPEAN PATENT SPECIFICATION

(11) **EP 1 493 251 B1**
(45) Date of publication and mention of the grant of the patent: **20.07.2016**
(21) Application number: 03708372.2
(22) Date of filing: 10.03.2003
(51) Int. Cl.: H04L 12/901

(54) **VIRTUAL TRUNKING OVER PACKET NETWORKS**
VIRTUAL TRUNKING UEBER PAKET-NETZWERKE
CIRCUIT VIRTUEL DE RÉSEAUX DE PAQUETS

(30) Priority: 26.03.2002 US 367676 P; 19.06.2002 US 175122
(43) Date of publication of application: 05.01.2005
(73) Proprietor: Genband US LLC, Frisco, TX 75034 (US)
(72) Inventor: SYLVAIN, Dany, Gatineau, Quebec J8T 6A6 (CA)
(74) Representative: Isarpatent
(86) International application number: PCT/IB2003/000861
(87) International publication number: WO 2003/081852

(56) References cited:
- EP-A- 0 961 519
- US-A1- 2001 024 438
- US-A1- 2001 053 149

## Description

### Field of the Invention

The present invention relates to telecommunications, and in particular to ensuring quality of service levels over packet networks.

### Background of the Invention

There is a growing interest in the convergence of the public switched telephone network (PSTN), the Internet and other internets and intranets. The convergence of these networks requires technology that facilitates interworking in a uniform and effective manner. The next generation of unified networks will provide an open and scalable architecture to accommodate multiple vendors and protocols under a common packet network. At the moment, there are several obstacles to providing telephony services on a packet network with the same level of performance and availability as is available on the PSTN today.

The traditional PSTN provides constant bandwidth streams of information between users. These media streams travel over dedicated circuits. On the other hand, packet networks have been prone to packet loss and delays, which affect the quality of streaming media required to carry voice communications. Given the high quality levels associated with the PSTN, subscribers expect and demand traditional quality regardless of the transmission medium.

The bursty nature of packet communications makes controlling communication quality and ensuring sufficient bandwidth very difficult. Traditional "fat pipe" models, which rely on the overall network to find a way to transmit the packets with the required quality of service levels, have not been successful. Further, the integration of call processing for the PSTN and packet networks has proven difficult to manage.

Given the desire to use packet networks as the centerpiece for telephony communications, there is a need for a way to ensure quality of service levels for telephony communication carried at least in part over packet networks and provide call processing in a uniform manner.

US Patent Application Publication No. US2001/0024438 describes an internet telephone system for ensuring communication quality and path setting methods. According to this document, an LSP Control Unit checks whether a label switching path established between edge label switch routers can provide the bandwidth necessary for transferring VolP packets. When this is not possible, a further LSP is established between the pair of edge label switch routers.

### Summary of the Invention

The present invention provides a method of establishing a path in a communication network according to the characterising portion of claim 1.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication network infrastructure according to one embodiment of the present invention.
FIGURE 2 is a block representation of a media gateway controller according to one embodiment of the present invention.
FIGURE 3 is a block representation of a gateway according to one embodiment of the present invention.
FIGURE 4 is a block representation of an edge router according to one embodiment of the present invention.
FIGURE 5 illustrates a label switched path according to one embodiment of the present invention.
FIGURE 6 illustrates a dynamic packet trunk group assigned to the label switch path of Figure 5 according to one embodiment of the present invention.
FIGURE 7 illustrates a network mesh configuration according to one embodiment of the present invention.
FIGURE 8 illustrates backup label switched paths for the mesh illustrated in Figure 7.

### Detailed Description of the Preferred Embodiments

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

The present invention establishes reserved paths between nodes in a packet network. Each reserved path has a defined bandwidth. Associated with each reserved path is a virtual trunk group. The virtual trunk group has the same bandwidth as the reserved path and supports a set number of channels. Telephony calls requiring media flows associated with a channel in the virtual trunk group will transport packets along the reserved path associated with the virtual trunk group. Access to the reserved path may be limited to only media flows associated with a virtual trunk group to ensure adequate bandwidth at all times for the number of channels associated with the virtual trunk group. Backup reserved paths may be associated with the primary reserved path to provide the necessary redundancy required for voice-based telephony applications. The following illustrates numerous ways to implement the concepts of the present invention.

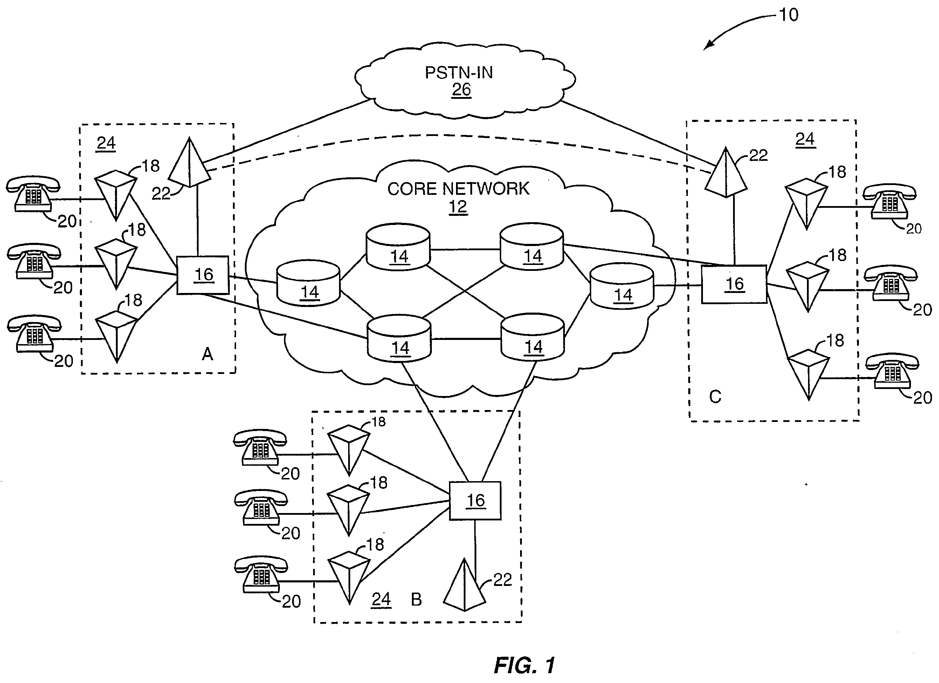

With reference to Figure 1, a communication environment 10 is centered about a core packet network 12 having numerous routers 14 interconnected to facilitate the routing of packets between edge routers 16. The edge routers 16 act as the ingress and egress points for associated media gateways 18 to the core network 12. The media gateways 18 provide a packet interface for circuit-switched telephony devices, such as telephones 20. Media gateway controllers 22 are associated with and effectively control groups of media gateways 18. As illustrated, an edge router 16 may be associated with a group of media gateways 18 and a media gateway controller 22 to form a node 24. There are three nodes 24 illustrated in Figure 1, referenced as A, B, and C. The media gateway controllers 22 may communicate with each other to facilitate call control between media gateways 18 in different nodes 24, or may cooperate with the call control entities of an intelligent network (IN) of the public switched telephone network (PSTN) 26.

To facilitate interworking of circuit-switched and packet communications, there are two primary elements: a media gateway 18 and a media gateway controller 22. The media gateway 18 provides the actual interface between the packet network associated with an edge router 16 and the telephony devices, such as telephones 20 or circuit-switched telephony interfaces such as TDM trunks (not shown). The media gateway controller 22 provides decision-making and coordination between media gateways 18 to facilitate interworking, alone or in association with other media gateway controllers 22 or the call control services of the PSTN 26.

The primary responsibility of a media gateway 18 is to allow traditional telephony media, such as voice, to be transported in a packet network using an Internet Protocol (IP) format asynchronous transfer mode (ATM) format. The media gateways 18 allow media to move without loss of integrity or quality between networks and network technologies. In essence, the media gateways 18 provide a bi-directional interface between disparate networks, and typically, between a traditional, circuit-switched, telephony network and a packet network.

For the purpose of describing the preferred embodiments of the present invention, the following description assumes the media gateways 18 provide a bi-directional interface between a circuit-switched network, such as the TDM-based PSTN devices or networks, and packet networks coupled to the edge routers 16. For example, the media gateway 18 may implement high-speed TDM trunk interfaces or line interfaces, which are commonly used interfaces between switching elements in a circuit-switched network.

The primary responsibilities of the media gateway controller 22 are to make decisions based on flow-related information and to provide instructions on interconnecting elements or endpoints within and throughout the networks. Media gateway controllers 22 store status information on media flows and may be used to generate administrative records for a variety of media-related activities, such as billing. Most prominently, media gateway controllers 22 provide coordination of media gateways 18. Typically, media gateway controllers 22 direct media gateways 18 to set up, handle, and end individual media flows, which will take place between the respective media gateways 18.

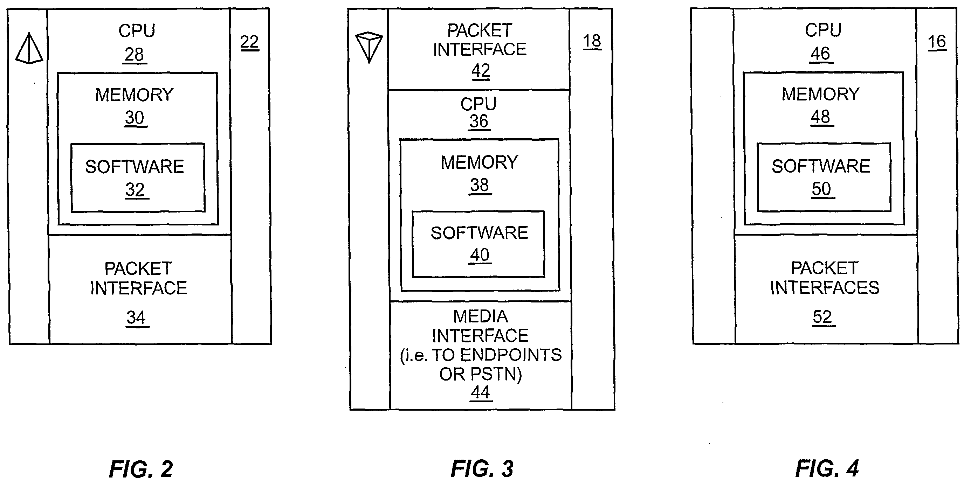

Referring now to Figure 2, a block schematic of a media gateway controller 22 is shown having a central processing unit (CPU) 28 containing memory 30 and the requisite software 32 for operation. The media gateway controller 22 will have at least one interface, preferably a packet interface 34 capable of communicating with other media gateway controllers 22 and the associated media gateways 18. To establish such communications, the media gateway controllers 22 associated with the media gateways 18 supporting the telephones 20 cooperate with one another and the media gateways 18 to establish the communication sessions.

Turning now to Figure 3, a block schematic of a media gateway 18 is shown having a CPU 36 containing memory 38 and the requisite software 40 for operation. The CPU 36 operates to provide a bi-directional interface between one or more packet interfaces 42 and the media interface 44. The media interface 44 is the interface opposite the packet network, and is preferably a circuit-switched interface supporting traditional trunks and lines of a traditional, circuit-switched telephone network. When interfacing with traditional telephony equipment, the media interface 44 is typically configured to handle TDM communications or any other analog or digital data streams required to facilitate such communications. As illustrated in Figure 1, the media interface 44 may be a line interface supporting a telephone 20.

Figure 4 is a block schematic of an edge router 16 having a CPU 46 with associated memory 48 and the requisite software 50 for operation. The edge router 16 will have packet interfaces 52 capable of communicating with the associated media gateways 18 and media gateway controller 22 as well as the routers 14 in the core network 12 as will be described below in greater detail.

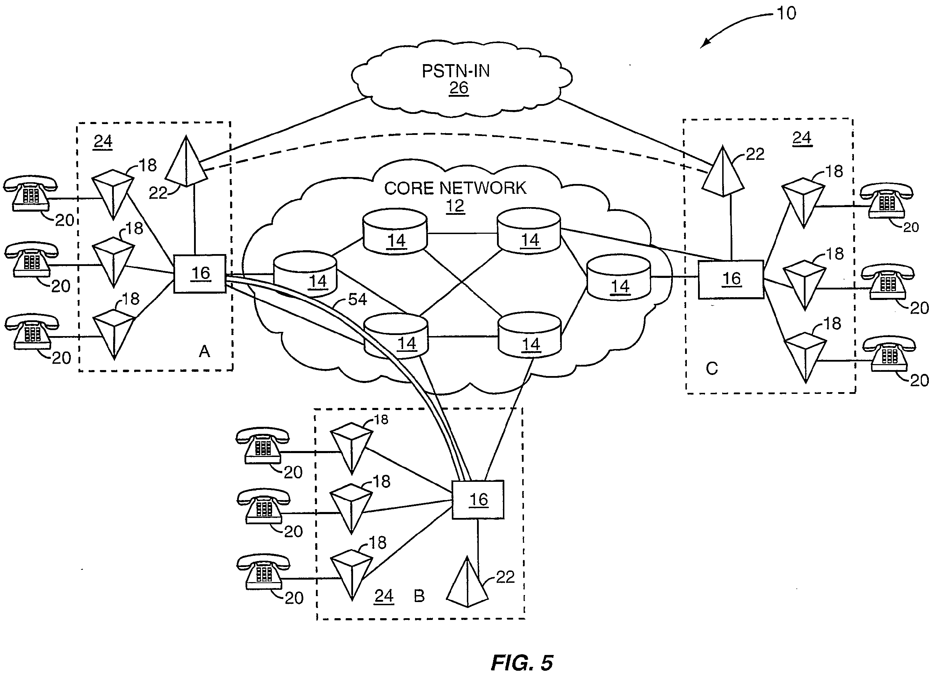

With reference to Figure 5, assume the routers 14 in the core network 12 and the edge routers 16 cooperate to provide a multi-protocol label switching (MPLS) architecture. In an MPLS architecture, labels are appended to data packets being transferred from one edge router 16 to another via routers 14 in the core network 12. The labels define a particular label-switched path (LSP) 54 over which the data packet should travel from one edge router 16 to another. In this embodiment, assume the edge routers 16 are label edge routers (LERs), and that the routers 14 in the core network 12 are label switch routers (LSRs). When packets enter an MPLS architecture, the LERs look at the destination for the packet and any other packet attributes and assign the packet a label. The LERs then assign the data packet to a corresponding LSP 54, and it is sent to a first LSR in the assigned LSP 54. Each LSR along the LSP 54 will forward the data packet along the LSP 54 based on the label, until the packet reaches a destination LER, which will remove the label and route the packet to an appropriate media gateway 18.

As the packets travel along the LSP 54, the LSRs may simply monitor the label and forward the packet and label untouched, or may replace the label with a new label to facilitate routing or switching along the LSP 54. Each LSR 14 will include routing tables based on the labels. Thus, LSPs 54 extend between LERs, which are identified by labels. The LERs assign, add, and remove labels as traffic enters or exits the MPLS architecture. The MPLS architecture allows the establishment of LSPs 54 having a defined bandwidth reserved for the specified traffic source. Those skilled in the art will be familiar with the concepts of establishing LSPs 54 in an MPLS architecture. In the preferred embodiment, the LSPs 54 are provisioned by an operation system or network provisioning tool based on constraints provided by the network operator.

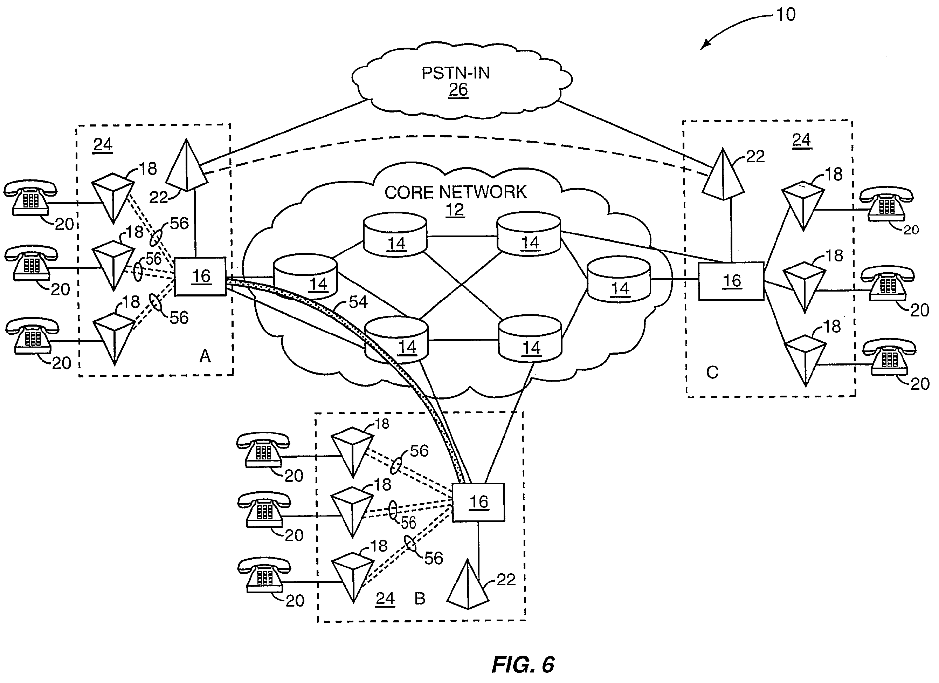

In one embodiment of the present invention, at least one LSP 54 is established between a first LER (edge router 16 in node A (24)) and a second LER (edge router 16 in node B (24)) as illustrated in Figure 5. The LSP 54 has a defined bandwidth and provides controlled access. A virtual, packet-based trunk group is mapped to correspond to the LSP 54. As such, the LSP 54 is engineered and provisioned with a guaranteed bandwidth matching the virtual trunk group size. With reference to Figure 6, the thick shaded line overlaying the LSP 54 represents the virtual trunk group extending between the LERs provided by the edge routers 16. Individual media flows 56 are setup dynamically by the media gateway controller 22 between the gateways 18 and the LERs provided by the edge routers 16. Each individual media flow 56 represents a bi-directional communication. The media gateways 18 will provide an interface between a traditional telephony interface associated with a telephone 20 or like device and an individual media flow 56.

The packets associated with individual media flows 56 are sent back and forth between the gateway 18 and the LER provided by the edge router 16. Accordingly, the individual media flows 56 feed into a virtual trunk group supported by an LSP 54 at the LER provided by the edge router 16. For example, individual real-time protocol (RTP) voice over IP streams generated at the media gateway 18 are sent to the LER and form a media flow 56. The LER will assign a label to the packets forming the media flow 56, and based on the label, route the packet to an LSR provided by a router 14 associated with the LSP 54. In converse, packets coming in over a virtual trunk group from an LSP 54 into the LER will have their labels removed, and will be routed over an individual media flow 56 to the appropriate media gateway 18, which will convert the packets into TDM streams, or the like, to facilitate telephony communications. Thus, the individual media flows 56 provide a virtual trunk for bi-directional communication, virtual trunk and provide a virtual trunk group between routers 14 and through the core network 12.

The individual media flows 56 on either side of the LSP 54 for a call are set up under the control of the media gateway controllers 22 using an appropriate call processing or media session control protocol, such as the session initiation protocol for telephones (SIP-T) or Bearer Independent Call Control (BICC), which are familiar to those skilled in the art. Thus, the media gateway controllers 22 will cooperate with each other or with call processing entities in the PSTN 26 to facilitate a call between telephones 20 in different nodes 24. Standard telephony interfaces are used between the telephones 20 and the gateways 18, wherein a packet-based media session is established between the respective gateways 18.

Since the LSP 54 has a defined bandwidth and the virtual trunk group is designed to correspond to the LSP 54, the LSP 54 cannot use more bandwidth than originally allocated. For example, if the virtual trunk group is set for 2000 channels, and all channels are used, the bandwidth on the LSP 54, the 2001^{st} call will be blocked by the call processing of the media gateway controllers 22. This prevents the LSP 54 from using more bandwidth than originally allocated to avoid violating bandwidth contracts or suffering from degraded quality of service due to overloading. Thus, once a virtual trunk group is fully used, the call processing provided by the media gateway controller 22 will block further calls.

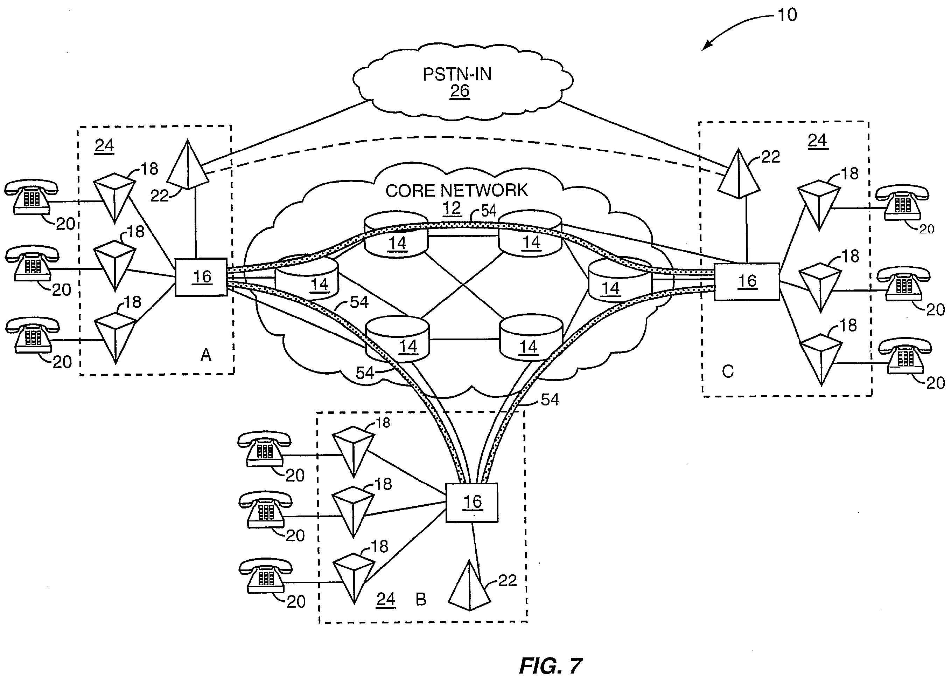

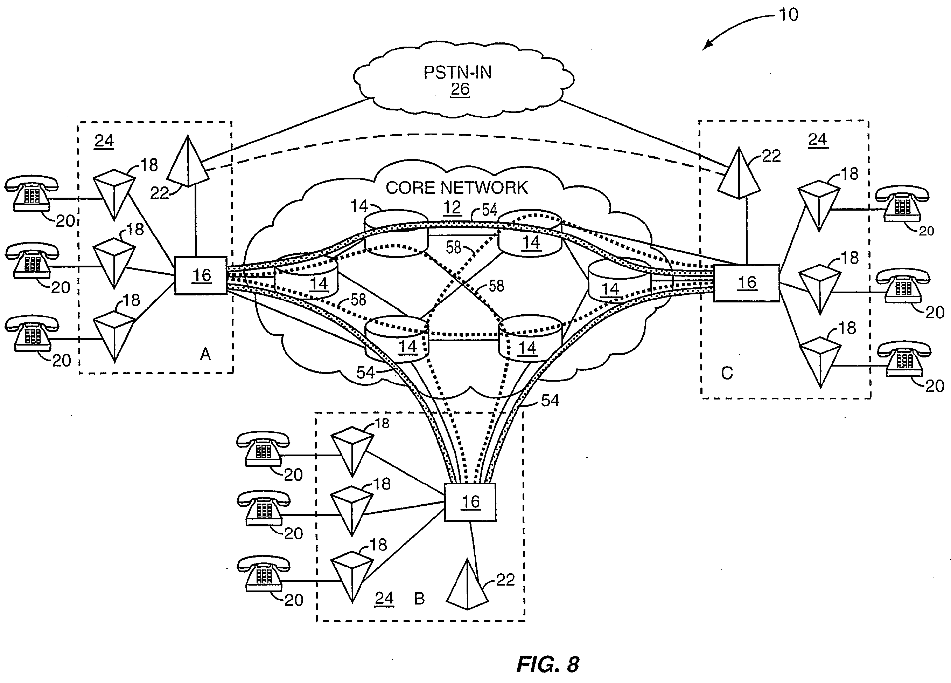

By associating the virtual trunk group with an LSP 54, the present invention assures quality of service levels over a packet network. As illustrated in Figure 7, LSPs 54 and corresponding virtual trunk groups can be configured between each of the various LERs provided by the edge routers 16, to provide a comprehensive mesh throughout the core network 12. To protect against link or device failures, backup LSPs 58, represented by dashed lines in Figure 8, may be provided in case the primary LSPs 54 are unavailable. The backup LSPs 58 are also engineered and provisioned with the maximum bandwidth required for the full virtual trunk group. If a primary LSP 54 fails, the LER provided by the edge router 16 can automatically route the traffic to the backup LSP 58. The LSRs provided by the routers 14 in the core network 12 also have routing tables to facilitate the backup LSPs 58. As such, call processing provided by the media gateway controllers 22 and the individual media flows 56 between the gateways 18 and the edge routers 16 are unaffected and are not required to react to a failure, unless both the primary and backup LSPs 54, 58 fail for a given virtual trunk group.

In another embodiment, instead of using a single LER, a pair of LERs may be used to increase network reliability, wherein a main LSP 54 terminates on one LER and a backup LSP 58 terminates on the second LER. Those skilled in the art will recognize the various combinations and flexibility provided with the implementation of a backup LSP 58 in association with a main LSP 54.

In one embodiment of the present invention, a failure of an LSP 54 or backup LSP 58 may be quickly detected by sending heartbeat signals, such as those described under ITU-T Recommendation Y.1711 - OAM mechanism for MPLS networks , over the LSP 54 or backup LSP 58 at periodic intervals. For example, if three heartbeats in a row are not received by the receiving LER, it will trigger a switchover to the backup LSP 58. Again, the switchover is done independently of call processing. The heartbeat interval may be integrated as part of the heartbeat message itself.

When both the primary and backup LSPs 54, 58 are operational, the LERs provided by the edge routers 16 can take steps to provide load sharing between the primary and backup LSPs 54, 58, in effect doubling the available bandwidth. Load sharing helps in reducing transport delay and jitter under normal conditions, and thus, improves overall quality. Further, unused bandwidth may be used by lower-priority traffic. The LERs may also be configured to take steps to prioritize and control traffic based on a desired quality of service associated with the data being transferred. The primary and backup LSPs 54, 58 are in fact two unidirectional LSPs, one in each direction, providing bi-directional communication.. In the preferred embodiment, each direction of the LSP 54, 58 will share the same links, routers 14, and nodes 24, instead of using potentially two different paths through the core network 12. Bi-directional primary and backup LSPs 54, 58 will reduce the impact of an LSP failure, as well as reduce the detection time of failures. If both the primary and backup LSPs 54, 58 fail, the LER provided by the edge router 16 may inform the media gateway controller 22 that the LSP, and thus the associated virtual trunk group, is no longer available. The media gateway controller 22 then takes the virtual trunk group out of service and block calls requiring use of the failed LSP 54, or takes alternative action.

In an alternative embodiment as shown in Figure 9, the core network 12 may include ATM switches and the reserved bandwidth path is implemented via permanent virtual circuits (PVCs) that may be established between two edge ATM switches through the core network 12. Like the LSPs, the PVCs are engineered and provisioned with a guaranteed bandwidth, which corresponds to a virtual trunk group. PVCs will typically carry a set number of packet streams of voice over IP (VoIP), voice over ATM (VoATM), or the like. Call processing, backup reserve paths, and failure detection may take place as described above.

Typically, call processing takes place on a call-by-call basis, wherein channels associated with a call are allocated on a channel-by-channel basis. A call processing counter may be implemented to keep track of the number of channels being used or remaining available in light of the reserved bandwidth associated with the LSP 54 or virtual trunk group. If the call processing counter reaches a maximum, a fast busy signal may be provided to indicate that all circuits are busy, thereby preventing violation of bandwidth contracts or degradation in quality of service.

Thus, the present invention establishes reserved paths between edge routers 16 with which virtual trunk groups are associated. The bandwidth for the reserved path in the associated virtual trunk group coincides to ensure quality of service levels over the core network 12. The reserved paths may be formed using various architectures, including MPLS and PVCs 62. Those skilled in the art will recognize improvements and modifications to the preferred embodiments of the present invention. All such improvements and modifications are considered within the scope of the concepts disclosed herein and the claims that follow.

In summary the present invention establishes reserved paths between nodes in a packet network. Each reserved path has a defined bandwidth and may be implemented as a label switched path (LSP) in a multiprotocol label switched (MPLS) network or a permanent virtual circuit (PVC) in an asynchronous time multiplexing (ATM) network. Associated with each reserved path is a virtual trunk group having the same bandwidth as that of the virtual path. Telephony calls requiring media flows associated with a channel in the virtual trunk group will transport packets along the reserved path associated with the virtual trunk group. Access to the reserved path may be limited to only media flows associated with a virtual trunk group to ensure adequate bandwidth at all times for the number of channels associated with the virtual trunk group.

## Claims

1. A method of establishing a path in a packet communication network, the method comprising:
a) establishing a reserved path (54) having a defined bandwidth between two edge routers (16);
**characterised by**:
each of the edge routers (16) being associated with a plurality of media gateways (18);
b) defining a virtual trunk group having the defined bandwidth; and
c) associating the virtual trunk group with the reserved path such that calls within the virtual trunk group are carried over the reserved path.

2. The method of claim 1 further comprising:
d) providing individual media flows (56) for each call between each edge router and the plurality of media gateways associated (18) with the edge routers; and
e) assigning the individual media flows to the virtual trunk group to facilitate communications between the plurality of media gateways and along the reserved path between the two edge routers.

3. The method of claim 1 or claim 2 wherein the virtual trunk group is defined to support a set number of calls at any given time based on the defined bandwidth and further comprising limiting a number of calls for the virtual trunk group based on the set number of calls.

4. The method of any one of claims 1 to 3, wherein the reserved path (54) is a label switched path provided by an MPLS network, and the edge routers are label edge routers.

5. The method of any one of claims 1 to 4, wherein the reserved path is an ATM permanent virtual circuit.

6. The method of any one of claims 1 to 5 further comprising establishing a plurality of reserved paths between a plurality of pairs of edge routers and defining a virtual trunk group for each of the plurality of reserved paths to form a mesh of virtual trunk groups.

7. The method of any one of claims 1 to 6, wherein all calls supported by the virtual trunk group are carried over a shared path provided by the reserved path.

8. The method of any one of claims 1 to 7, further comprising establishing a reserved backup path having the defined bandwidth between the two edge routers.

9. The method of claim 8 further comprising:
detecting a failure of the reserved path; and
associating the virtual trunk group with the reserved backup path such that calls within the virtual trunk group are carried over the reserved backup path when the failure is detected.

10. The method of claim 9 further comprising:
providing a heartbeat signal along the reserved path;
monitoring the heartbeat signal;
triggering the association of the virtual trunk group with the reserved backup path if the heartbeat signal is undetected.

11. The method of any one of claims 8 to 10, further comprising distributing loads associated with calls supported by the virtual trunk group among the reserved path and the reserved backup path when the reserved path and the reserved backup path are operational.

12. The method of any one of claims 1 to 11, further comprising:
associating the plurality of media gateways with at least one of the two edge routers to form a node, the plurality of media gateways providing an interface for circuit-switched communications; and
providing call processing for calls handled by the plurality of media gateways with a media gateway controller associated with the node.

13. A node (24) comprising:
a) a first edge router (16) providing one end of a reserved path (54) having a defined bandwidth and extending to another edge router (16);
**characterised in that** the node further comprises:
b) a plurality of media gateways (18) associated with the first edge router and supporting calls from telephony devices; and
c) a media gateway controller (22) facilitating call control for the plurality of media gateways wherein the node (24) stores data defining a virtual trunk group having the defined bandwidth and being associated with the reserved path such that the calls within the virtual trunk group are carried over the reserved path via the first edge router.

14. The node of claim 13 wherein individual media flows (56) for each call are established between the edge router and the plurality of media gateways; and the individual media flows are assigned to the virtual trunk group to facilitate communications between the plurality of media gateways and along the reserved path between the two edge routers.

15. The node of claim 13 or claim 14, wherein the virtual trunk group is defined to support a set number of calls at any given time based on the defined bandwidth.

16. The node of any one of claims 13 to 15, wherein the reserved path is an MPLS label switched path and the edge router is a label edge router.

17. The node of any one of claims 13s to 16, wherein the reserved path is an ATM permanent virtual circuit.

18. The node of any one of claims 13 to 15, wherein a reserved backup path is established having the defined bandwidth between the two edge routers.

19. The node of claim 18 wherein the edge router is adapted to:
detect a failure of the reserved path; and
associate the virtual trunk group with the reserved backup path such that calls within the virtual trunk group are carried over the reserved backup path when the failure is detected.

20. The node of claim 19 wherein the edge router is further adapted to:
provide a heartbeat signal along the reserved path;
monitor the heartbeat signal;
trigger the association of the virtual trunk group with the reserved backup path if the heartbeat signal is undetected.

21. The node of any one of claims 18 to 20, wherein loads associated with calls supported by the virtual trunk group are distributed among the reserved path and the reserved backup path when the reserved path and the reserved backup path are operational.

22. A system for establishing a path in a packet communication network, the system comprising:
a) means for establishing a reserved path (54) having a defined bandwidth between two edge routers (16);
**characterised in that**:
each of the edge routers (16) being associated with a plurality of media gateways (18);
b) means for defining a virtual trunk group having the defined bandwidth; and
c) means for associating the virtual trunk group with the reserved path such that calls within the virtual trunk group are carried over the reserved path.

23. The system of claim 22 further comprising:
means for providing individual media flows (56) for each call between each edge router and the plurality of media gateways (18) associated with the edge routers; and
means for assigning the individual media flows to the virtual trunk group such that communications between the plurality of media gateways and along the reserved path between the two edge routers is facilitated.

24. The system of claim 22 or claim 23 wherein the virtual trunk group is defined to support a set number of calls at any given time based on the defined bandwidth and further comprising means for limiting a number of calls for the virtual trunk group based on the set number of calls.

25. The system of any one of claims 22 to 24 wherein the reserved path is an MPLS label switched path, and the edge routers are label edge routers

26. The system of any one of claims 22 to 25 wherein the reserved path is an ATM permanent virtual circuit.

27. The system of any one of claims 22 to 26 further comprising means for establishing a plurality of reserved paths between a plurality of pairs of edge routers and defining a virtual trunk group for each of the plurality of reserved paths to form a mesh of virtual trunk groups.

28. The system of any one of claims 22 to 27 wherein all calls supported by the virtual trunk group are carried over a shared path provided by the reserved path.

29. The system of any one of claims 22 to 28 further comprising means for establishing a reserved backup path having the defined bandwidth between the two edge routers.

30. The system of claim 29 further comprising:
means for detecting a failure of the reserved path; and
means for associating the virtual trunk group with the reserved backup path such that calls within the virtual trunk group are carried over the reserved backup path when the failure is detected.

31. The system of claim 30 further comprising:
means for providing a heartbeat signal along the reserved path;
means for monitoring the heartbeat signal;
means for triggering the association of the virtual trunk group with the reserved backup path if the heartbeat signal is undetected.

32. The system of any one of claims 29 to 31 further comprising means for distributing loads associated with calls supported by the virtual trunk group among the reserved path and the reserved backup path when the reserved path and the reserved backup path are operational.

## Patentansprüche

1. Verfahren zum Herstellen eines Pfades in einem Paket-Kommunikationsnetz, wobei das Verfahren Folgendes umfasst:
a) Herstellen eines reservierten Pfades (54) mit einer definierten Bandbreite zwischen zwei Edge-Routern (16);
**dadurch gekennzeichnet, dass**:
jeder der Edge-Router (16) mit mehreren Medien-Gateways (18) verknüpft ist;
b) Definieren einer virtuellen Verbindungsleitungsgruppe, welche die definierte Bandbreite aufweist; und
c) Verknüpfen der virtuellen Verbindungsleitungsgruppe mit dem reservierten Pfad, so dass Rufe innerhalb der virtuellen Verbindungsleitungsgruppe über den reservierten Pfad transportiert werden.

2. Verfahren nach Anspruch 1, das des Weiteren Folgendes umfasst:
d) Bereitstellen individueller Medienflüsse (56) für jeden Ruf zwischen jedem Edge-Router und den mehreren Medien-Gateways (18), die mit dem Edge-Router verknüpft sind; und
e) Zuweisen der individuellen Medienflüsse zu der virtuellen Verbindungsleitungsgruppe, um eine Kommunikation zwischen den mehreren Medien-Gateways und entlang des reservierten Pfades zwischen den zwei Edge-Routern zu ermöglichen.

3. Verfahren nach Anspruch 1 oder Anspruch 2, wobei die virtuelle Verbindungsleitungsgruppe dafür definiert ist, eine eingestellte Anzahl von Rufen zu jeder gegebenen Zeit auf der Basis der definierten Bandbreite zu unterstützen, und das des Weiteren umfasst, eine Anzahl von Rufen für die virtuelle Verbindungsleitungsgruppe auf der Basis der eingestellten Anzahl von Rufen zu begrenzen.

4. Verfahren nach einem der Ansprüche 1 bis 3, wobei der reservierte Pfad (54) ein durch ein MPLS-Netz bereitgestellter Label Switched Path ist und die Edge-Router Label Edge-Router sind.

5. Verfahren nach einem der Ansprüche 1 bis 4, wobei der reservierte Pfad ein permanenter virtueller ATM-Kreis ist.

6. Verfahren nach einem der Ansprüche 1 bis 5, das des Weiteren Folgendes umfasst: Herstellen mehrerer reservierter Pfade zwischen mehreren Paaren von Edge-Routern und Definieren einer virtuellen Verbindungsleitungsgruppe für jeden der mehreren reservierten Pfade, um ein Netz aus virtuellen Verbindungsleitungsgruppen zu bilden.

7. Verfahren nach einem der Ansprüche 1 bis 6, wobei alle Rufe, die durch die virtuelle Verbindungsleitungsgruppe unterstützt werden, über einen gemeinsam genutzten Pfad transportiert werden, der durch den reservierten Pfad bereitgestellt wird.

8. Verfahren nach einem der Ansprüche 1 bis 7, das des Weiteren das Herstellen eines reservierten Backup-Pfades, der die definierte Bandbreite aufweist, zwischen den zwei Edge-Routern umfasst.

9. Verfahren nach Anspruch 8, das des Weiteren Folgendes umfasst:
Detektieren eines Ausfalls des reservierten Pfades; und
Verknüpfen der virtuellen Verbindungsleitungsgruppe mit dem reservierten Backup-Pfad, so dass Rufe innerhalb der virtuellen Verbindungsleitungsgruppe über den reservierten Backup-Pfad transportiert werden, wenn der Ausfall detektiert wird.

10. Verfahren nach Anspruch 9, das des Weiteren Folgendes umfasst:
Bereitstellen eines Herzschlagsignals entlang des reservierten Pfades;
Überwachen des Herzschlagsignals;
Auslösen der Verknüpfung der virtuellen Verbindungsleitungsgruppe mit dem reservierten Backup-Pfad, wenn das Herzschlagsignal nicht detektiert wird.

11. Verfahren nach einem der Ansprüche 8 bis 10, das des Weiteren das Verteilen von Lasten, die mit Rufen verknüpft sind, die durch die virtuelle Verbindungsleitungsgruppe unterstützt werden, zwischen dem reservierten Pfad und dem reservierten Backup-Pfad umfasst, wenn der reservierte Pfad und der reservierte Backup-Pfad in Betrieb sind.

12. Verfahren nach einem der Ansprüche 1 bis 11, das des Weiteren Folgendes umfasst:
Verknüpfen der mehreren Medien-Gateways mit mindestens einem der zwei Edge-Router, um einen Knoten zu bilden, wobei die mehreren Medien-Gateways eine Schnittstelle für leitungsvermittelte Kommunikation bereitstellen; und
Bereitstellen einer Rufverarbeitung für Rufe, die durch die mehreren Medien-Gateways gehandhabt werden mit einer Medien-Gateway-Steuereinheit, die mit dem Knoten verknüpft ist.

13. Knoten (24), der folgendes umfasst:
a) einen ersten Edge-Router (16), der ein Ende eines reservierten Pfades (54) bereitstellt, der eine definierte Bandbreite hat und sich zu einem anderen Edge-Router (16) erstreckt;
**dadurch gekennzeichnet, dass** der Knoten des Weiteren Folgendes umfasst:
b) mehrere Medien-Gateways (18), die mit dem ersten Edge-Router verknüpft sind und Rufe von Telefoniegeräten unterstützen; und
c) eine Medien-Gateway-Steuereinheit (22), die eine Rufsteuerung für die mehreren Medien-Gateways ermöglicht, wobei der Knoten (24) Daten speichert, die eine virtuelle Verbindungsleitungsgruppe definieren, welche die definierte Bandbreite aufweist und mit dem reservierten Pfad verknüpft ist, so dass die Rufe innerhalb der virtuellen Verbindungsleitungsgruppe über den reservierten Pfad und über den ersten Edge-Router transportiert werden.

14. Knoten nach Anspruch 13, wobei individuelle Medienflüsse (56) für jeden Ruf zwischen dem Edge-Router und den mehreren Medien-Gateways gebildet werden und die individuellen Medienflüsse zu der virtuellen Verbindungsleitungsgruppe zugewiesen werden, um eine Kommunikation zwischen den mehreren Medien-Gateways und entlang des reservierten Pfades zwischen den zwei Edge-Routern zu ermöglichen.

15. Knoten nach Anspruch 13 oder Anspruch 14, wobei die virtuelle Verbindungsleitungsgruppe dafür definiert ist, eine eingestellte Anzahl von Rufen zu jeder gegebenen Zeit auf der Basis der definierten Bandbreite zu unterstützen.

16. Knoten nach einem der Ansprüche 13 bis 15, wobei der reservierte Pfad ein MPLS-Label Switched Path ist und der Edge-Router ein Label Edge-Router ist.

17. Knoten nach einem der Ansprüche 13 bis 16, wobei der reservierte Pfad ein permanenter virtueller ATM-Kreis ist.

18. Knoten nach einem der Ansprüche 13 bis 15, wobei ein reservierter Backup-Pfad, der die definierte Bandbreite aufweist, zwischen den zwei Edge-Routern gebildet wird.

19. Knoten nach Anspruch 18, wobei der Edge-Router für Folgendes ausgelegt ist:
Detektieren eines Ausfalls des reservierten Pfades; und
Verknüpfen der virtuellen Verbindungsleitungsgruppe mit dem reservierten Backup-Pfad, so dass Rufe innerhalb der virtuellen Verbindungsleitungsgruppe über den reservierten Backup-Pfad transportiert werden, wenn der Ausfall detektiert wird.

20. Knoten nach Anspruch 19, wobei der Edge-Router des Weiteren für Folgendes ausgelegt ist:
Bereitstellen eines Herzschlagsignals entlang des reservierten Pfades;
Überwachen des Herzschlagsignals;
Auslösen der Verknüpfung der virtuellen Verbindungsleitungsgruppe mit dem reservierten Backup-Pfad, wenn das Herzschlagsignal nicht detektiert wird.

21. Knoten nach einem der Ansprüche 18 bis 20, wobei Lasten, die mit Rufen verknüpft sind, die durch die virtuelle Verbindungsleitungsgruppe unterstützt werden, zwischen dem reservierten Pfad und dem reservierten Backup-Pfad verteilt werden, wenn der reservierte Pfad und der reservierte Backup-Pfad in Betrieb sind.

22. System zum Herstellen eines Pfades in einem Paket-Kommunikationsnetz, wobei das System Folgendes umfasst:
a) Mittel zum Herstellen eines reservierten Pfades (54) mit einer definierten Bandbreite zwischen zwei Edge-Routern (16);
**dadurch gekennzeichnet, dass**:
jeder der Edge-Router (16) mit mehreren Medien-Gateways (18) verknüpft ist;
b) Mittel zum Definieren einer virtuellen Verbindungsleitungsgruppe, welche die definierte Bandbreite aufweist; und
c) Mittel zum Verknüpfen der virtuellen Verbindungsleitungsgruppe mit dem reservierten Pfad, so dass Rufe innerhalb der virtuellen Verbindungsleitungsgruppe über den reservierten Pfad transportiert werden.

23. System nach Anspruch 22, das des Weiteren Folgendes umfasst:
Mittel zum Bereitstellen individueller Medienflüsse (56) für jeden Ruf zwischen jedem Edge-Router und den mehreren Medien-Gateways (18), die mit den Edge-Routern verknüpft sind; und
Mittel zum Zuweisen der individuellen Medienflüsse zu der virtuellen Verbindungsleitungsgruppe, so dass eine Kommunikation zwischen den mehreren Medien-Gateways und
entlang des reservierten Pfades zwischen den zwei Edge-Routern ermöglicht wird.

24. System nach Anspruch 22 oder Anspruch 23, wobei die virtuelle Verbindungsleitungsgruppe dafür definiert ist, eine eingestellte Anzahl von Rufen zu jeder gegebenen Zeit auf der Basis der definierten Bandbreite zu unterstützen, und des Weiteren Mittel umfasst, um eine Anzahl von Rufen für die virtuelle Verbindungsleitungsgruppe auf der Basis der eingestellten Anzahl von Rufen zu begrenzen.

25. System nach einem der Ansprüche 22 bis 24, wobei der reservierte Pfad ein MPLS-Label Switched Path ist und die Edge-Router Label Edge-Router sind.

26. System nach einem der Ansprüche 22 bis 25, wobei der reservierte Pfad ein permanenter virtueller ATM-Kreis ist.

27. System nach einem der Ansprüche 22 bis 26, das des Weiteren Mittel zum Herstellen mehrerer reservierter Pfade zwischen mehreren Paaren von Edge-Routern und zum Definieren einer virtuellen Verbindungsleitungsgruppe für jeden der mehreren reservierten Pfade umfasst, um ein Netz aus virtuellen Verbindungsleitungsgruppen zu bilden.

28. System nach einem der Ansprüche 22 bis 27, wobei alle Rufe, die durch die virtuelle Verbindungsleitungsgruppe unterstützt werden, über einen gemeinsam genutzten Pfad transportiert werden, der durch den reservierten Pfad bereitgestellt wird.

29. System nach einem der Ansprüche 22 bis 28, das des Weiteren Mittel zum Herstellen eines reservierten Backup-Pfades, der die definierte Bandbreite aufweist, zwischen den zwei Edge-Routern umfasst.

30. System nach Anspruch 29, das des Weiteren Folgendes umfasst:
Mittel zum Detektieren eines Ausfalls des reservierten Pfades und
Mittel zum Verknüpfen der virtuellen Verbindungsleitungsgruppe mit dem reservierten Backup-Pfad, so dass Rufe innerhalb der virtuellen Verbindungsleitungsgruppe über den reservierten Backup-Pfad transportiert werden, wenn der Ausfall detektiert wird.

31. System nach Anspruch 30, das des Weiteren Folgendes umfasst:
Mittel zum Bereitstellen eines Herzschlagsignals entlang des reservierten Pfades;
Mittel zum Überwachen des Herzschlagsignals;
Mittel zum Auslösen der Verknüpfung der virtuellen Verbindungsleitungsgruppe mit dem reservierten Backup-Pfad, wenn das Herzschlagsignal nicht detektiert wird.

32. System nach einem der Ansprüche 29 bis 31, das des Weiteren Mittel zum Verteilen von Lasten, die mit Rufen verknüpft sind, die durch die virtuelle Verbindungsleitungsgruppe unterstützt werden, zwischen dem reservierten Pfad und dem reservierten Backup-Pfad, wenn der reservierte Pfad und die reservierten Backup-Pfad in Betrieb sind, umfasst.

## Revendications

1. Procédé d'établissement d'un chemin dans un réseau de communication par paquets, le procédé comprenant :
a) établir un chemin réservé (54) ayant une largeur de bande définie entre deux routeurs de bord (16);
**caractérisé par** :
chacun des routeurs de bord (16) étant associé à une pluralité de passerelles média (18);
b) définir un faisceau de circuits virtuel ayant la largeur de bande définie; et
c) associer le faisceau de circuits virtuel au chemin réservé de telle sorte que des appels au sein du faisceau de circuits virtuel sont effectués sur le chemin réservé.

2. Procédé selon la revendication 1, comprenant en outre :
d) fournir des flux média individuels (56) pour chaque appel entre chaque routeur de bord et la pluralité de passerelles média associées (18) aux routeurs de bord ; et
e) affecter les flux média individuels au faisceau de circuits virtuel pour faciliter les communications entre la pluralité de passerelles média et le long du chemin réservé entre les deux routeurs de bord.

3. Procédé selon la revendication 1 ou la revendication 2, dans lequel le faisceau de circuits virtuel est défini pour prendre en charge un nombre défini d'appels à n'importe quel moment en fonction de la largeur de bande définie et comprenant en outre de limiter un nombre d'appels pour le faisceau de circuits virtuel en fonction du nombre défini d'appels.

4. Procédé selon l'une quelconque des revendications 1 à 3, dans lequel le chemin réservé (54) est un chemin commuté avec étiquette fourni par un réseau MPLS, et les routeurs de bord sont des routeurs de bord avec étiquette.

5. Procédé selon l'une quelconque des revendications 1 à 4, dans lequel le chemin réservé est un circuit virtuel permanent ATM.

6. Procédé selon l'une quelconque des revendications 1 à 5, comprenant en outre d'établir une pluralité de chemins réservés entre une pluralité de paires de routeurs de bord et de définir un faisceau de circuits virtuel pour chacun de la pluralité de chemins réservés pour former un maillage de faisceaux de circuits virtuels.

7. Procédé selon l'une quelconque des revendications 1 à 6, dans lequel tous les appels pris en charge par le faisceau de circuits virtuel sont effectués sur un chemin partagé fourni par le chemin réservé.

8. Procédé selon l'une quelconque des revendications 1 à 7, comprenant en outre d'établir un chemin de secours réservé ayant la bande passante définie entre les deux routeurs de bord.

9. Procédé selon la revendication 8, comprenant en outre :
détecter une panne du chemin réservé; et
associer le faisceau de circuits virtuel au chemin de secours réservé de telle sorte que des appels au sein du faisceau de circuits virtuel sont effectués sur le chemin de secours réservé lorsque la panne est détectée.

10. Procédé selon la revendication 9, comprenant en outre :
fournir un signal de battement de coeur le long du chemin réservé ;
surveiller le signal de battement de coeur ;
déclencher l'association du faisceau de circuits virtuel au chemin de secours réservé si le signal de battement de coeur est détecté.

11. Procédé selon l'une quelconque des revendications 8 à 10, comprenant en outre de distribuer des charges associées à des appels pris en charge par le faisceau de circuits virtuel entre le chemin réservé et le chemin de secours réservé lorsque le chemin réservé et le chemin de secours réservé sont opérationnels.

12. Procédé selon l'une quelconque des revendications 1 à 11, comprenant en outre :
associer la pluralité de passerelles média à au moins l'un des deux routeurs de bord pour former un noeud, la pluralité de passerelles média fournissant une interface pour des communications par commutation de circuits; et
fournir un traitement d'appels pour des appels gérés par la pluralité de passerelles média avec un contrôleur de passerelle média associé au noeud.

13. Noeud (24), comprenant :
a) un premier routeur de bord (16) fournissant une extrémité d'un chemin réservé (54) ayant une largeur de bande définie et s'étendant vers un autre routeur de bord (16);
**caractérisé en ce que** le noeud comprend en outre :
b) une pluralité de passerelles média (18) associées au premier routeur de bord et prenant en charge des appels provenant d'appareils téléphoniques; et
c) un contrôleur de passerelle média (22) facilitant le contrôle d'appels pour la pluralité de passerelles média, dans lequel le noeud (24) stocke des données définissant un faisceau de circuits virtuel ayant la largeur de bande définie et étant associé au chemin réservé de telle sorte que les appels au sein du faisceau de circuits virtuel sont effectués sur le chemin réservé par l'intermédiaire du premier routeur de bord.

14. Noeud selon la revendication 13, dans lequel des flux média individuels (56) pour chaque appel sont établis entre le routeur de bord et la pluralité de passerelles média; et les flux média individuels sont affectés au faisceau de circuits virtuel pour faciliter les communications entre la pluralité de passerelles média et le long du chemin réservé entre les deux routeurs de bord.

15. Noeud selon la revendication 13 ou la revendication 14, dans lequel le faisceau de circuits virtuel est défini pour prendre en charge un nombre défini d'appels à n'importe quel moment en fonction de la bande passante définie.

16. Noeud selon l'une quelconque des revendications 13 à 15, dans lequel le chemin réservé est un chemin commuté avec étiquette MPLS et le routeur de bord est un routeur de bord avec étiquette.

17. Noeud selon l'une quelconque des revendications 13 à 16, dans lequel le chemin réservé est un circuit virtuel permanent ATM.

18. Noeud selon l'une quelconque des revendications 13 à 15, dans lequel un chemin de secours réservé est établi ayant la bande passante définie entre les deux routeurs de bord.

19. Noeud selon la revendication 18, dans lequel le routeur de bord est conçu pour :
détecter une panne du chemin réservé; et
associer le faisceau de circuits virtuel au chemin de secours réservé de telle sorte que des appels au sein du faisceau de circuits virtuel sont effectués sur le chemin de secours réservé lorsque la panne est détectée.

20. Noeud selon la revendication 19, dans lequel le routeur bord est en outre conçu pour :
fournir un signal de battement de coeur le long du chemin réservé;
surveiller le signal de battement de coeur;
déclencher l'association du faisceau de circuits virtuel au chemin de secours réservé si le signal de battement de coeur est détecté.

21. Noeud selon l'une quelconque des revendications 18 à 20, dans lequel des charges associées à des appels pris en charge par le faisceau de circuits virtuel sont distribuées entre le chemin réservé et le chemin de secours réservé lorsque le chemin réservé et le chemin de secours réservé sont opérationnels.

22. Système pour établir un chemin dans un réseau de communication par paquets, le système comprenant :
a) des moyens pour établir un chemin réservé (54) ayant une largeur de bande définie entre deux routeurs de bord (16);
**caractérisé en ce que** :
chacun des routeurs de bord (16) étant associé à une pluralité de passerelles média (18);
b) des moyens pour définir un faisceau de circuits virtuel ayant la largeur de bande définie; et
c) des moyens pour associer le faisceau de circuits virtuel au chemin réservé de telle sorte que des appels au sein du faisceau de circuits virtuel sont effectués sur le chemin réservé.

23. Système selon la revendication 22, comprenant en outre :
des moyens pour fournir des flux média individuels (56) pour chaque appel entre chaque routeur de bord et la pluralité de passerelles média (18) associées aux routeurs de bord; et
des moyens pour affecter les flux média individuels au faisceau de circuits virtuel de telle sorte que les communications entre la pluralité de passerelles média et
le long du chemin réservé entre les deux routeurs de bord sont facilitées.

24. Système selon la revendication 22 ou la revendication 23, dans lequel le faisceau de circuits virtuel est défini pour prendre en charge un nombre défini d'appels à n'importe quel moment en fonction de la largeur de bande définie et comprenant en outre des moyens pour limiter un nombre d'appels pour le faisceau de circuits virtuel en fonction du nombre défini d'appels.

25. Système selon l'une quelconque des revendications 22 à 24, dans lequel le chemin réservé est un chemin commuté avec étiquette MPLS, et les routeurs de bord sont des routeurs de bord avec étiquette

26. Système selon l'une quelconque des revendications 22 à 25, dans lequel le chemin réservé est un circuit virtuel permanent ATM.

27. Système selon l'une quelconque des revendications 22 à 26, comprenant en outre des moyens pour établir une pluralité de chemins réservés entre une pluralité de paires de routeurs de bord et définir un faisceau de circuits virtuel pour chacun de la pluralité chemins réservés pour former un maillage de faisceaux de circuits virtuels.

28. Système selon l'une quelconque des revendications 22 à 27, dans lequel tous les appels pris en charge par le faisceau de circuits virtuel sont effectués sur un chemin partagé fourni par le chemin réservé.

29. Système selon l'une quelconque des revendications 22 à 28, comprenant en outre des moyens pour établir un chemin de secours réservé ayant la bande passante définie entre les deux routeurs de bord.

30. Système selon la revendication 29, comprenant en outre :
des moyens pour détecter une panne du chemin réservé; et
des moyens pour associer le faisceau de circuits virtuel au chemin de secours réservé de telle sorte que des appels au sein du faisceau de circuits virtuel sont effectués sur le chemin de secours réservé lorsque la panne est détectée.

31. Système selon la revendication 30, comprenant en outre :
des moyens pour fournir un signal de battement de coeur le long du chemin réservé;
des moyens pour surveiller le signal de battement de coeur ;
des moyens pour déclencher l'association du faisceau de circuits virtuel au chemin de secours réservé si le signal de battement de coeur est détecté.

32. Système selon l'une quelconque des revendications 29 à 31, comprenant en outre des moyens pour distribuer des charges associées à des appels pris en charge par le faisceau de circuits virtuel entre le chemin réservé et le chemin de secours réservé lorsque le chemin réservé et le chemin de secours réservé sont opérationnels.
